# EUROPEAN PATENT SPECIFICATION

(11) **EP 3 624 287 B1**
(45) Date of publication and mention of the grant of the patent: **27.12.2023**
(21) Application number: 18798471.1
(22) Date of filing: 19.04.2018
(51) Int. Cl.: H02G 9/06, H02G 15/00, H02G 9/10, H02G 3/06, H02G 3/22

(54) **ANTI-THEFT SYSTEM FOR POWER LINES**
DIEBSTAHLSICHERUNGSSYSTEM FÜR STROMLEITUNGEN
SYSTÈME ANTIVOL POUR LIGNES ÉLECTRIQUES

(30) Priority: 10.05.2017 ES 201730678
(43) Date of publication of application: 18.03.2020
(73) Proprietor: Reciclados Y Maquilas Valencia, S.L., 46119 Náquera (ES)
(72) Inventor: CHANCOSA SPACEK, Bruno, 46119 Náquera (ES)
(74) Representative: Polo Montañes, Carlos
(86) International application number: PCT/ES2018/070315
(87) International publication number: WO 2018/206832

(56) References cited:
- EP-A1- 1 313 190
- WO-A1-2016/034227
- CN-U- 202 602 226
- DE-U1- 29 618 632
- ES-U- 1 074 746
- JP-A- 2001 136 645
- US-A- 5 190 408
- US-A1- 2007 020 974
- US-A1- 2007 020 974

## Description

### Object of the Invention

The present invention relates to an anti-theft system for power lines, and more specifically for preventing the theft of wiring corresponding to power lines that run underground.

The object of the invention is to hinder the theft of underground power line wiring as well as to minimize the amount of wiring that can be removed should the offender gain access to the power line.

Another object of the invention is to deter the action of stealing power line cables by the fact that the effort required for removing them will not be compensated by the amount of cable that can be possibly removed.

### Background of the Invention

Due to the significant value that copper has acquired owing to its optimal conditions for transporting electrical power as a result of its conductivity, criminal activities relating to the theft of copper cables in power lines have been on the rise in recent years.

In that sense, many highly organized gangs have emerged, all of them being skilled in performing criminal acts of this type, such that the stolen material comes from places such as electrical substations, agricultural fields, street lighting, rail transport, lighting for sports facilities, and generally any type of installation having copper therein.

The material stolen by the offenders is then sold on the black market, without any major problems, although at a value that is logically lower than the market value.

Regardless of the economic loss that the theft of power line wiring entails, the constant costs for repairing and replacing the installations which suffer deterioration as a result of the theft must be factored in.

Indirect costs that may be incurred for line users due to line loss, costs that can barely be quantified due to the many variables at play, may also arise, where these costs cannot be objectively quantified, even though the damage caused to the service or users is too significant to be ignored.

The high environmental cost must also be highlighted, given that a large amount of CO₂ is generated for manufacturing copper cables.

Safety systems intended for providing a solution to the problems described above are sold on the market nationwide (in Spain), such that the proposed solutions are based on a device retaining the cable inside a space defined in the corresponding inspection chamber for the passage of the cable, allowing thieves to disable the system in each of the inspection chambers if they want to remove the cable from the installation. In other words, once the thief gains access to two adjoining inspection chambers, they can cut the cable where the devices are installed and pull on the opposite ends to remove the cable that runs between both inspection chambers, such that depending on the distance between inspection chambers, the thief will be able to remove a larger or smaller amount of cable, which means that a significant amount of several meters can be stolen with no problem at all.

Although said solutions make the operation of removing the cable difficult, i.e., the operation is more laborious, this, however, does not deter the offenders, so they are relatively ineffective.

Document EP 1313190 describes a seal comprising a seal body having teeth on the outer surface, intended for being coupled to the internal corrugations of the end of the tube in which it is inserted, such that the cable is connected to this body through a part or O-ring which is fixed to the cable by screwing the two ends of the two sections of the ring together, said ring in turn being connected to the main body of the seal. While this type of fixing is not the most secure given that once the level of pulling force on the cable is surpassed, the ring is no longer operative, the biggest problem this device has is how easy it is for the main body to be removed from the tube itself, because given that this is not a radially expandable element, the main body must present certain allowance and plastic deformability in order to be inserted, and this is obviously a considerable drawback when it comes to taking it out.

Lastly, document US 2007/020974 A1 describes a tamper resistant device configured to prevent unauthorized persons from pulling wires out of a conduit. The device consists of a tamper resistant plug comprising a deformable, resilient engaging member that is operatively compressed by a compressing mechanism to radially extend its outer surface toward the conduit's inner surface, thus defining an expansion anchor. Each wire is received in a wire receiving groove on the outer surface of the engaging member such that compression of the engaging member tightly compresses the wires against the conduit to increase drag and prevent pulling the wires out of the conduit. The compression mechanism includes rigid members at each end of the engaged member and a biasing mechanism, preferably a bolt-like member that threadably connects to the distal rigid member or to a nut-like element, to bias the rigid members together. The head of the connector is configured to be tamper resistant and cooperatively engage the proximal rigid member to further prevent theft.

The device thus described works by virtue of the radial deformation of its engaging member, so that, contrary to what occurs in the present application, for the device to be effective the cables must at all times be tightly wedged, which may damage them, so that once installed it is not possible to move the cables in the direction opposite to that in which they are removed.

### Description of the Invention

The proposed anti-theft system for power lines solves the problems mentioned above in a fully satisfactory manner.

More specifically, the system of the invention is based on assembling, inside the ends leading into the inspection chambers through which the power line or wiring runs, a type of expansion anchor formed by a first tubular element the external surface of which has, close to one of its ends, teeth which engage with and are retained in the annular channels defined in the corrugated tubes for the channeling of cables and implemented in the existing inspection chambers, so that expansion element can be readily assembled at the ends of said corrugated tubes accessing the holes established in the inspection chambers and through which the line to be protected goes through.

Obviously, the securing and anchoring of the expansion element inside the corrugated tube is extremely effective, given that the inspection chambers are covered with concrete, thereby imparting greater strength to the system.

In order for said first element in the form of an expansion anchor to correctly perform its function, a second element which is inserted into the former element has been envisaged, causing same to expand, given that said second internal element exerts a radial force which makes the first tubular element in the form of an anchor expand, with the assembly thereby being perfectly fixed in the installation.

Said two elements must be attached to one another to form a single assembly by means of mechanical elements, such as screws or any other suitable anchoring system, provided that they are means which hinder disassembling the system itself.

Another feature of the invention is that the internal element constitutes a guide because the power line wiring runs through same, for which it has been envisaged to establish in this second internal tubular element channels in which the power line cables are located and on the channels of which there have been envisaged wedging means which allow inserting the wiring to be installed in one direction, with the removal thereof from the opposite direction being made impossible, so if offenders try to steal the wiring, the system is wedged on the cable, and this wedging will be greater the greater the pulling force exerted on the cable, thereby resulting in a progressive reduction in the section of the wiring which will lead to the cable splitting as a result of the combination of (pulling and shear) forces, thereby preventing the removal of the wiring beyond the system itself.

Ultimately, when the wiring splits in correspondence with the systems established in the holes of the inspection chambers through which the power line runs, the amount of removed cable is minimized to a few centimeters.

Obviously, the means used to produce the system will have a high strength, i.e., strength that must be greater than the breaking or splitting strength of the wiring itself, so that they cannot be broken.

The following can be mentioned among the most significant advantages and features offered by the described system:
- The access by a thief to disable the system is prevented, unlike what occurs with conventional systems and means for protecting power line wiring.
- The point where cable breakage will occur can be located, without depending on the cable securing method used for the removal thereof.
- It is possible to integrate the system in already installed power lines, all this with a simple assembly and functional security.
- The amount of cable that can be removed in each attempted theft is minimized, reducing it to the amount of cable visible inside the inspection chamber.
- The costs for repairing and replacing the wiring are reduced due to the minimization of the removed cable.
- It greatly deters theft in this type of installation and reduces the collateral damage caused as a result of the theft.
- Cable consumption is reduced, with the corresponding reduction in the environmental impact generated by cable manufacture.
- A high degree of reliability of the function for which the system has been envisaged is achieved.

### Description of the Drawings

To complement the description that will be made below and for the purpose of helping to better understand the features of the invention according to a preferred practical embodiment thereof, a set of drawings is attached as an integral part of said description in which the following is depicted in an illustrative and non-limiting character:

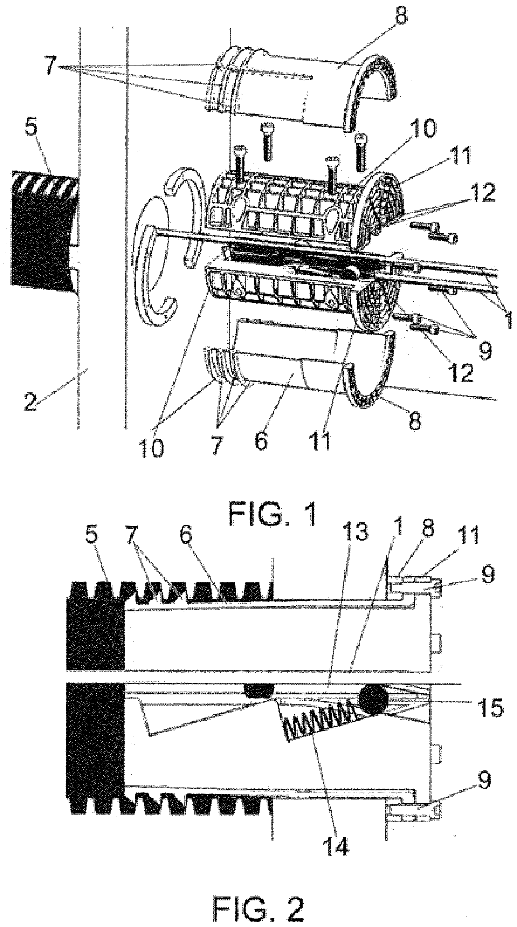

Figure 1 shows an exploded perspective view of an anti-theft system for power lines made according to the object of the invention.
Figure 2 shows a side elevational and section view of the system in an operative position.

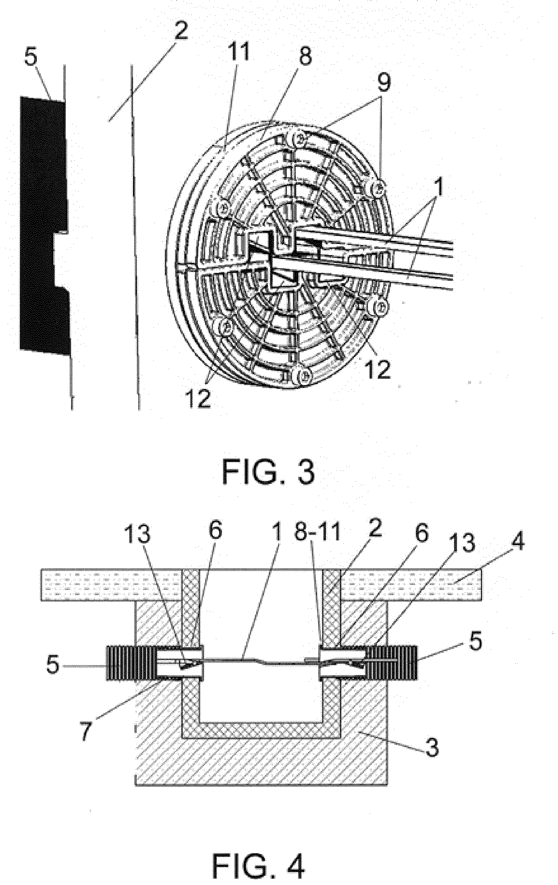

Figure 3 shows a view through the inner part of the system in which the channels of the element for guiding the cables can be seen, with said cables running through those channels.
Figure 4 shows, finally, a schematic section view of a detail of the system applied in an inspection chamber.

### Preferred Embodiment of the Invention

In view of the mentioned figures, it can be observed how in the anti-theft system for power lines the corresponding cable or cables (1) run between inspection chambers (2) externally protected by concrete (3) and flush with the asphalt (4), sidewalk, or other structure.

In any case, the power line running between inspection chambers goes through a corrugated tube (5), as a protective element, for the passage and conduction of said cables (1), such that the ends of the corrugated tubes (5) lead into appropriate holes established for that purpose in the walls of the corresponding inspection chamber (2).

On the basis of these features, the system of the invention is based on assembling on the inside of the ends of the corrugated tubes (5) of the inspection chambers (2) a first tubular element (6), obtained from two symmetrical half-casings, which will perform the functions of an "expansion anchor", such that said first tubular element (6) has in correspondence with the area close to its free end for insertion into the corrugated tube (5), teeth (7) which engage with and are retained in the angular channels defined in the corrugated tube (5) for the conduction of the wiring, while the opposite end of said first tubular element (6) has a type of flange (8) with holes for the passage of the corresponding locking screws (9) as will be explained below.

A second tubular element (10) is assembled inside the first tubular element (6), concentric thereto, and which is likewise obtained from two symmetrical half-casings and having a flange (11) at one of its ends, this tubular element (10) serving as a guide for the corresponding power line wiring (1), having to that end channels (12) in which the power line cable or cables (1) are perfectly positioned and retained, with the special particularity that the second tubular element (10) for guiding the wiring acts as means radially pressing outwards against the first tubular element (6), which causes same to be secured and anchored in the channels of the corrugated tube (5), such that the concentric first and second tubular elements (6) and (10) form a single assembly which is achieved by fixing by means of screws (9) associated with the respective flanges (8) and (11), or by means of any other mechanical attachment system.

Moreover, it has been envisaged that in correspondence with the channels (12) for guiding or positioning the wiring (1), there are arranged engagement means (13) which can be formed by a spring (14) which presses on a roller (15), such that those means (13) establish a wedging on the cables (1), which allows moving or pulling in one direction, but leads to a wedging thereon in the opposite direction, and therefore the impossibility of moving the cable in the exit direction, to the point where if the cable is subjected to a significant force, said operation will lead to the cable being crushed and subsequently split, such that it is impossible to remove the cable comprised between adjoining inspection chambers.

## Claims

1. An anti-theft system for power lines, namely underground power lines, which are arranged between inspection chambers (2) established in a concrete envelope (3) and communicated through corrugated tubes (5) for the channeling of power cables (1) being of the type including an expansion anchor, **characterized in that** it is made up of a first expansion anchor-like tubular element (6), the inner diameter of which decreases towards its free end for insertion, obtained from two half-casings, insertable into the corresponding end of the corrugated tube (5) that leads into the respective hole of the inspection chamber (2), said first tubular element (6) having external teeth (7) in correspondence with the area close to its free end for insertion in the corrugated tube (5) that can engage with the annular channels of the corrugated tube (5), wherein there is assembled inside said first tubular element (6) a second tubular radial expansion element (10) likewise obtained from two half-casings, said first and second tubular elements (6) and (10) being fixed to one another by mechanical means, wherein the second internal tubular element (10) is provided with longitudinal channels (12) for the positioning and guiding of the corresponding power cable or cables (1), having internal sinkages in which mechanical wedging elements are placed formed by engagement means (13) of the cables (1) in the exit direction, formed by a spring (14) which presses on a roller (15) which can be moved over an inclined surface with respect to the cable (1), with respect to which the roller (15) is tangent.

2. The anti-theft system for power lines according to claim 1, **characterized in that** the first and second tubular elements (6) and (10) are fixed to one another by means of screws (9) that go through holes established in respective flanges (8) and (11) at the ends opposite to the free end for insertion of both parts.

## Patentansprüche

1. Diebstahlsicherungssystem für Stromleitungen, nämlich unterirdische Stromleitungen, welche zwischen Inspektionskammern (2) angeordnet sind, welche in einer Betonhülle (3) geschaffen sind und über Wellrohre (5) zur Kanalisierung von Stromkabeln (1) der Art beinhaltend einen Spreizanker in Verbindung stehen, **dadurch gekennzeichnet, dass** es aus einem ersten spreizankerähnlichen rohrförmigen Element (6) besteht, dessen Innendurchmesser sich zu dessen freien Ende zur Einführung hin verringert, erhalten aus zwei Gehäusehälften, welche in das entsprechende Ende des Wellrohrs (5), welches in das jeweilige Loch der Inspektionskammer (2) führt, eingeführt werden können, wobei das genannte erste rohrförmige Element (6) Außenverzahnungen (7) in Übereinstimmung mit dem Bereich nah an dessen freien Ende zur Einführung im Wellrohr (5) aufweist, welche in die ringförmigen Kanäle des Wellrohrs (5) eingreifen können, wobei es innerhalb des genannten ersten rohrförmigen Element (6) ein zweites rohrförmiges radiales Spreizelement (10) zusammengefügt gibt, ebenfalls aus zwei Gehäusehälften erhalten, wobei das genannte erste rohrförmige Element (6) und das genannte zweite rohrförmige Element (10) aneinander durch mechanische Mittel fixiert sind, wobei das zweite innere rohrförmige Element (10) mit länglichen Kanälen (12) für das Positionieren und das Führen des entsprechenden Stromkabels oder der entsprechenden Stromkabel (1) versehen ist, aufweisend innere Einsenkungen, in welchen mechanische Verkeilungselemente platziert sind, gebildet durch Eingriffsmittel (13) der Kabel (1) in Ausgangsrichtung, gebildet durch eine Feder (14), welche auf eine Rolle (15) drückt, welche über einer geneigten Oberfläche in Bezug auf das Kabel (1) bewegt werden kann, in Bezug auf welche die Rolle (15) tangential ist.

2. Diebstahlsicherungssystem für Stromleitungen nach Anspruch 1, **dadurch gekennzeichnet, dass** das erste rohrförmige Element (6) und das zweite rohrförmige Element (10) aneinander mittels Schrauben (9) fixiert sind, welche durch Durchgangslöcher gehen, welche in jeweiligen Flanschen (8) und (11) an den Enden gegenüber dem freien Ende zur Einführung von beiden Teilen geschaffen sind.

## Revendications

1. Système antivol pour lignes électriques, à savoir des lignes électriques souterraines, qui sont disposées entre des chambres d'inspection (2) établies dans une enveloppe en béton (3) et communiquées à travers des tubes ondulés (5) pour la canalisation de câbles électriques (1) étant du type incluant un ancrage à expansion, **caractérisé en ce qu'**il est composé d'un premier élément tubulaire en forme d'ancrage à expansion (6), dont le diamètre intérieur diminue vers son extrémité libre pour insertion, obtenu à partir de deux demi-coquilles, insérable dans l'extrémité correspondante du tube ondulé (5) qui conduit au trou respectif de la chambre d'inspection (2), ledit premier élément tubulaire (6) ayant des dents externes (7) en correspondance avec la zone proche de son extrémité libre pour insertion dans le tube ondulé (5) qui peut s'engager dans les canaux annulaires du tube ondulé (5), dans lequel à l'intérieur dudit premier élément tubulaire (6) il est assemblé un deuxième élément tubulaire d'expansion radiale (10) également obtenu à partir de deux demi-coquilles, lesdits premier et deuxième éléments tubulaires (6) et (10) étant fixés l'un à l'autre par des moyens mécaniques, dans lequel le deuxième élément tubulaire interne (10) est pourvu de canaux longitudinaux (12) pour le positionnement et le guidage du câble ou des câbles électriques correspondants (1), ayant des renfoncements internes dans lesquels sont placés des éléments de calage mécanique formés par des moyens d'engagement (13) des câbles (1) dans la direction de sortie, formés par un ressort (14) qui fait pression sur un rouleau (15) qui peut être déplacé sur une surface inclinée par rapport au câble (1), par rapport auquel le rouleau (15) est tangent.

2. Système antivol pour lignes électriques selon la revendication 1, **caractérisé en ce que** le premier et le deuxième éléments tubulaires (6) et (10) sont fixés l'un à l'autre au moyen de vis (9) qui traversent des trous établis dans des brides respectives (8) et (11) aux extrémités opposées à l'extrémité libre pour insertion des deux parties.
